Europäisches Patentamt

European Patent Office

Office européen des brevets

(19)

(11) **EP 1 699 016 A2**

(12) **EUROPEAN PATENT APPLICATION**

(43) Date of publication:
 **06.09.2006 Bulletin 2006/36**

(51) Int Cl.:
 *G06T 7/00* (2006.01)

(21) Application number: **06250904.7**

(22) Date of filing: **21.02.2006**

(84) Designated Contracting States:
 **AT BE BG CH CY CZ DE DK EE ES FI FR GB GR
 HU IE IS IT LI LT LU LV MC NL PL PT RO SE SI
 SK TR**
 Designated Extension States:
 **AL BA HR MK YU**

(30) Priority: **22.02.2005 GB 0503629**

(71) Applicant: **Microsharp Holdings Limited
 Watchfield
 Oxfordshire SN6 8TY (GB)**

(72) Inventor: **Ptitsyn, Nikolai
 Swindon
 Wiltshire SN4 0DH (GB)**

(74) Representative: **Palmer, Jonathan R.
 Boult Wade Tennant,
 Verulam Gardens,
 70 Gray's Inn Road
 London WC1X 8BT (GB)**

(54) **Method and apparatus for automated analysis of biological specimen**

(57)    Apparatus and methods for automatic classification of cells in biological samples is disclosed. Aggregation parameters of identified objects are calculated using relative spatial positions of the objects, and the aggregation parameters are used in the classification. Centres of cells may be located using an edge detector and parameterisation across at least one more dimension than the spatial dimensions of the image.

Fig. 12

EP 1 699 016 A2

**Description**

Field of the Invention

The present invention relates to the automatic classification of cells in biological specimens, and more particularly, but not exclusively, to a method for quantitative microscopical analysis in cytology and pathology applications, and an associated computer system therefor.

Background of the Invention

The recognition of cancer or other diseases or conditions manifested through cellular abnormalities is currently a highly skilled task. For example, the cervical smear test is performed to detect cervical cancer at its earliest stages when it can be treated and the chances of a complete cure are high.

Currently, the analysis and interpretation of cervical smears is dependent upon trained cytotechnologists (also known as screeners) who examine the thousands of cells in a smear under the microscope for evidence of cancer. The cancer cells can be distinguished from the normal cells in the smear by their shape and size and also by the structure of the nucleus. Screening is a tedious, error-prone task and greatly dependent on the skills of the cytotechnologists, and would therefore benefit from at least partial automation. An automated image analysis system that filters out the typically 50%-75% of the slides that contain no cellular abnormalities would be a valuable contribution to clinical laboratory practice, as it would allow the screeners to focus on potentially cancerous samples.

The following three automated image analysis systems are known:

1. The FocalPoint system of TriPath Imaging, Inc., NC, USA, is intended for use in initial screening of cervical cytology slides. FocalPoint scans the entire slide and then scores the slides based upon the likelihood of an abnormality. The system identifies up to 25% of successfully processed slides as requiring no further review.

2. The ThinPrep Imaging System of Cytyc Corporation, MA, USA, locates areas within a slide image of possible abnormalities and directs a human to 22 fields of view on the slide, leaving the ultimate decision for complete slide review to the cytotechnologist.

3. The Cervical Cancer Screening System (CCSS) of Visible Diagnostics, Denmark, is a prototype which identifies about 28% of processed slides as requiring no further review, but has a false negative rate higher than 20% [Final Public Report of Autoscreen Activity, EPCC, The University of Edinburgh, 2004, http://www.epcc.ed.ac.uk/autoscreen/].

Clinical studies [Vassilakos, P. et al. (2002), "Use of automated primary screening on liquid-based thin-layer preparations", *Acta Cytol* no 46 pp 291-295; and Parker, E.M. et al (2004), "FocalPoint slide classification algorithms show robust performance in classification of high-grade lesions on SurePath liquid-based cervical cytology slides", *Diagn Cytopathol* no 30 pp 107-110] have confirmed the ability of the above Tripath and Cytyc systems to facilitate the detection of cervical cell abnormalities in routine clinical screening. But there is much scope to improve on cost and performance. In particular, increasing the fraction of slides requiring no further review is a desired improvement.

The concept of an automated cytology system was introduced in the 1970s [Poulsen, R.S. (1973), "Automated Prescreening of Cervical Cytology Specimens", Ph.D. Thesis, McGill University, Canada]. A typical system consists of an automated microscope, a digital frame camera and a data processing computer. The data processing computer performs the following essential operations: image acquisition, segmentation, feature extraction and classification. U.S. Patents 5,978,497, 5,787,188, 5,740,269, 5,978,497 and 6,317,516 disclose improvements to this basic approach. The improvements disclosed include use of a pixel intensity averager to locate cell groups, combining multiple classifiers, use of a small/large object remover and the setting of special "zero class" and "conflict class" classes.

Various implementations of these recognition operations have been researched and developed. U.S. patent 5,828,776 discloses an approach which was subsequently implemented using three different algorithms-"single cell" (U.S. Patent 6,134,354,), "cell group" (U.S. Patent 5,978,498) and "thick group" (U.S. Patent 5,987,158)-enabling classification of the corresponding patterns.

Various image processing techniques have been applied to cervical screening. Examples include pixel averaging and thresholding disclosed in U.S. Patents 5,867,610 and 5,978,498, contrast enhancing and thresholding disclosed in U.S. Patent 6,134,354, morphological operations on threshold images disclosed in U.S. Patents 5,710,842 and 6,134,354, erosion followed by dilation disclosed in U.S. Patent 5,787,208, RGB triplets grouping according to the minimum transmittance in the three channels disclosed in U.S. Patent Application 2003/0138140; active contours disclosed in Australian Patent 748081 and the Hough transform [Walker, N.S. (1991), "Biomedical image interpretation", PhD thesis, Queen Mary and Westfield College, Mile End Road, London, UK].

Different classifiers have been applied to cervical screening. These include decision rules / range membership disclosed in U.S. Patents 5,978,497; 5,828,776; 5,740,269, neural networks disclosed in U.S. Patents 4,965,725; 5,287,272; 6,327,377; 5,740,269 and binary decision trees disclosed in U.S. Patents 5,987,158; 5,978,497; 5,740,269.

U. S. Patents 6,327,377 and 6,181,811 disclose the improvements of cytological screening by scoring and ranking the slides. The score determines the priority for further review by a human expert. U.S. Patents 5,677,966 and 5,889,880 disclose a semi-automated screening method where a gallery of objects of interest is shown to a human expert. In U.S. Patent 5,799,101 the rating score depends on a priori information concerning the patient, such as patient age and prior health history and diagnosis.

U.S. Patent Application Publication Number 2001/0041347 discloses a method of cell analysis based on fluorescence microscopy for cell-based screening. The term "cell aggregate intensity" used therein represents the sum of the pixel intensity values for a particular cell, which should not be confused with the term "aggregation feature" used in the description of the present invention.

A significant limitation of the above prior art systems is that the objects are analysed independently of each other. No quantitative feature provides information on the object positional relationships to the classifier.

In the art, the features considered in automated cytology analysis include [U.S. Patent 5,978,497; Rodenacker, K. et al (2003), "A feature set for cytometry on digitised microscopic images", *Analytical Cellular Pathology,* no 25, IOS Press]:

1. shape features, e.g. area, perimeter, roundness, symmetry;

2. intensity and colorimetric features, e.g. greyscale and colour statistical mean values;

3. texture features, e.g. 2D filter responses, fractal dimension, rice fields, run-length cooccurrence, chromatin features;

4. structure features, e.g. contextual features estimated from particle relationships inside the nucleus.

These prior art features are analysed computationally by image processing within the segmented area and do not describe the environment surrounding the object.

Chaudhuri [Chaudhuri, B.B. et al (1988), "Characterization and featuring of histological section images", Pattern *Recognition* Letters vol 7 pp 245-252] describes image analysis of the structural organization of cells in histological sections. After semi-automated segmentation, an object graph is constructed in which vertices correspond to nucleus centres and edges describe the connection between nuclei according to certain properties. Two graphs are considered: minimum spinning tree (MST) and zone of influence tessellation. Global features are derived from both graphs based on the average length of the edges connected to each nucleus vertex. This Chaudhuri method assumes that all cells are of the same type and does not distinguish between neighbourhood objects. Apart from the average length of the edge, no local features are derived from the graphs.

Geusebroek [Geusebroek, J.-M. et al (1999), "Segmentation of tissue architecture by distance", *Cytometry* no 35 pp 11-22] uses the k-th nearest neighbours (k-NN) graph to segment tissues. Similarly to Chaudhuri, Geusebroek evaluates the average distance to the k-NN cells without distinguishing their types and features.

Certain prior art methods such as disclosed in Rodenacker, K. et al (1990), "Quantification of tissue sections: graph theory and topology as modelling tools", Pattern *Recognition Letters* no 11 pp 275-284 use graph theory and topology to arrange cells into agglomerations or clusters. The disadvantage of this approach is the computational difficulty of processing large scale agglomerations of cells. When a large image is divided into frames for parallel frame recognition, significant computational resources are required to construct a graph from multiple frames and to analyse it.

The invention seeks to address the above and other problems and limitations of the related prior art.

Summary of the Invention

The invention provides methods and apparatus for automatically analysing images of objects, and especially of biological specimens such as images of biological cells dispersed across a glass microscope slide, in order to classify the cells, or other objects. In particular, the invention may be used to identify cellular abnormalities, such as abnormal squamous and glandular cells in cervical screening.

In the related prior art, techniques for image analysis may be divided into steps of image acquisition, segmentation, feature extraction and classification.

According to a first aspect, the invention uses aggregation features of objects in an image to assist in object classification. Typically, an aggregation feature is obtained on the basis of neighbourhood objects and their relationship to the given object, thus characterising the neighbourhood environment. Such features may be obtained by statistical processing of features of the neighbourhood objects, such as object area and darkness. The combined use of prior art object features and aggregation features provides a significant improvement in recognition accuracy.

In embodiments of the invention, aggregation features of a given cell or other object are obtained by transforming and weighting features of neighbourhood objects in such a way that the weight is a function of the distance between the given object and its neighbourhood objects. In contrast to Chaudhuri (1988), all nucleus pairs are considered; no MST or tessellation graph is constructed.

The contribution of each neighbourhood object to an aggregation feature can be weighted in accordance with a Euclidean distance from the object being considered. Both basic and aggregation features can be utilized in the classification process.

In particular, the invention provides a method of classifying each of a plurality of biological cells shown in an image, comprising the steps of:

segmenting the image into a plurality of objects;

for each object, extracting from the image data a set of object features, each set comprising at least one aggregation feature calculated using the spatial distribution of the other objects; and

classifying each object on the basis of the corresponding object features.

The invention also provides corresponding apparatus elements, such as corresponding segmenting, extracting or calculating, and classifying elements or means, implemented as a suitable computer or other data processing system, for example as software functions and/or hardware elements.

The aggregation features may be computed in an iterative manner to allow propagation of feature information across multiple objects.

The invention also provides methods and apparatus for automatically analyzing an image to locate centres or other locations of cells in the image. Such techniques can be used to identify individual cells, so that the image can be segmented suitably for carrying out the classification process discussed above using aggregation features. In preferred embodiments a generalized Hough transform such as a circular or elliptical Hough transform is applied to edge detection data derived from the image. Potential cell centres identifiable from the results of the Hough transform are validated by checking the distribution of some property of points contributing to each centre, for example, the distribution of vector gradient directions of contributing points from the edge detection data.

In particular, the invention provides a method of automatically analysing an image to locate centres of biological cells shown in the image, comprising the steps of:

applying edge detection to the image to yield edge data;

applying a parameterisation to the edge data to yield parameterized data distributed across the same space as the image and at least one further dimension;

applying a mapping to the parameterised data to yield predictions of said centres of biological cells, the mapping process including applying a validation function across the at least one further dimension of the parameterised data.

The step of applying edge detection may comprise applying a gradient function to the image. Applying a parameterisation may comprise applying a Hough transform or a generalised Hough transform. The Hough transform may be a circular or elliptic Hough transform and may be used to identify potential centres of the cells.

The validation function may comprise a multiplicative product function. The method may further include applying a smoothing function to the parameterised data prior to applying the mapping process.

The invention also provides corresponding apparatus including suitable edge detection, parameterization, mapping and validation elements or processes.

The invention also provides one or more computer readable media comprising computer program code adapted to put any of the described methods or apparatus into effect, either on the above mentioned multiple processor computer system, or on any other suitable computer system.

Any of the described arrangements may also comprise one or more suitable microscopes, such as an automated scanning microscope using a linear array detector.

Both single cells and groups of cells may be analysed within the same framework. Objects that appear as cells may be classified using fuzzy membership or probability notation.

The invention may be put into practice in a number of ways and some embodiments will now be described, by way of non-limiting example only, with reference to the following figures, in which:

Figure 1 shows automated cytology apparatus embodying the invention.

Figures 2a to 2d show examples of cervical cells:

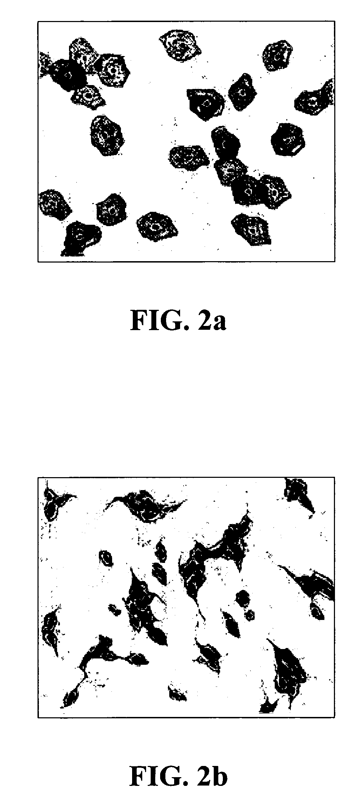

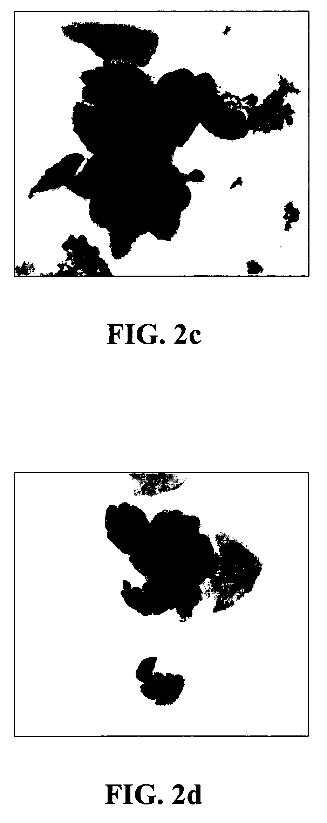

normal squamous cells in Figure 2-a; abnormal squamous cells in Figure 2-b; normal glandular cells in Figure 2-c; and
abnormal glandular cells in Figure 2-d;

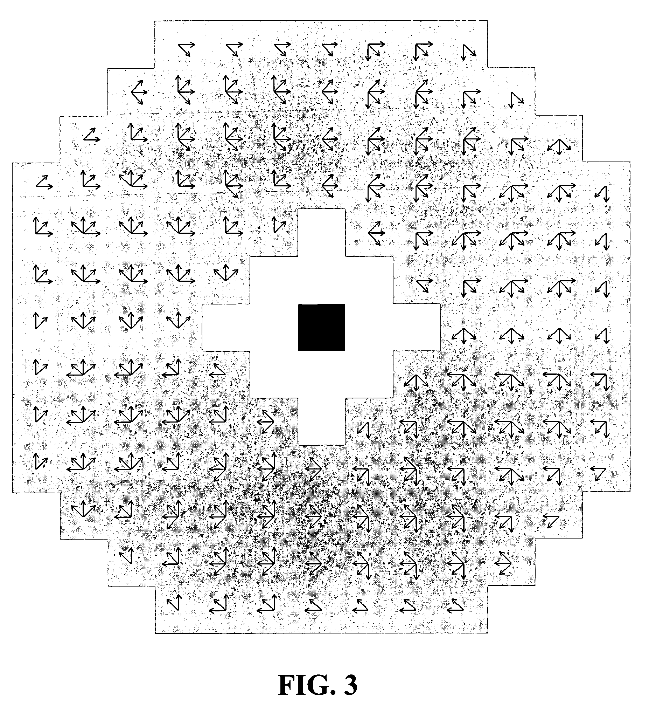

Figure 3 illustrates a ring type grid used to detect a cell contour line;

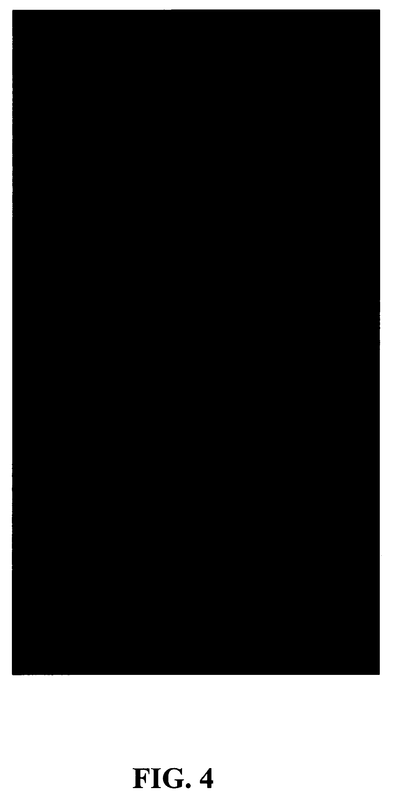

Figure 4 is a magnified image of a nucleus of a simple squamous cell;

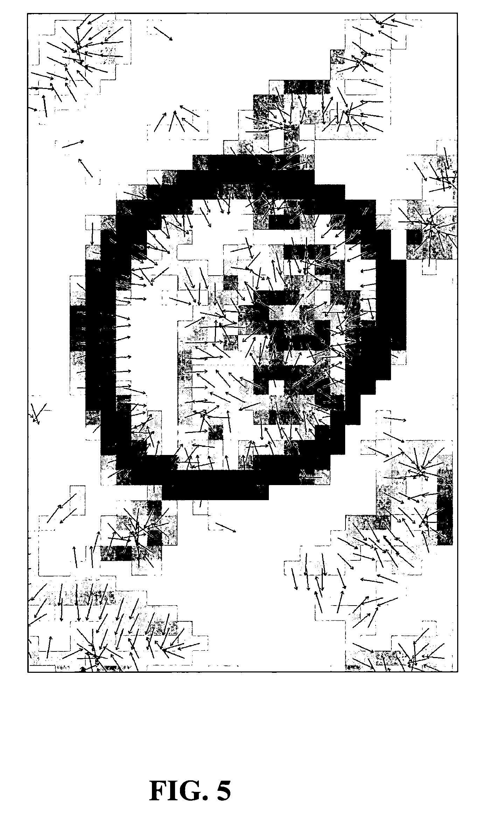

Figure 5 is a gradient image corresponding to Figure 4;

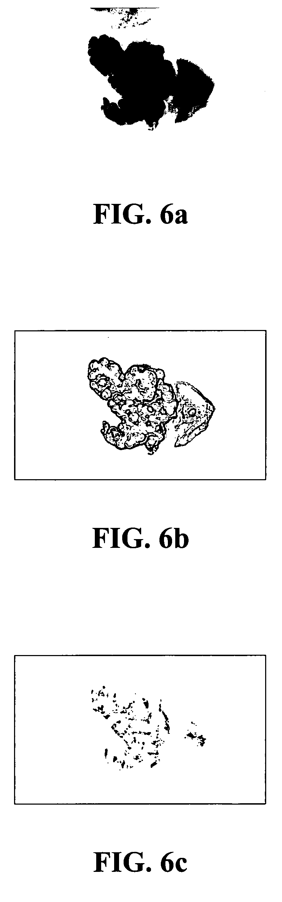

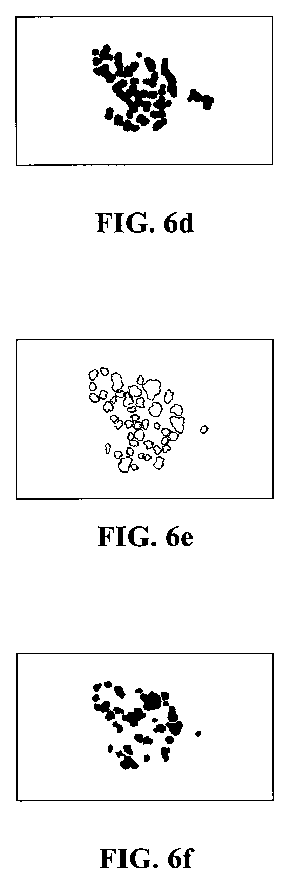

Figure 6a to 6f illustrates segmentation stages of an embodiment of the invention: an original image in Figure 6-a; a gradient magnitude image in Figure 6-b; a Hough-transformed image in Figure 6-c; local maxima are identified in Figure 6-d; nucleus border in Figure 6-e and segmented objects in Figure 6-f;

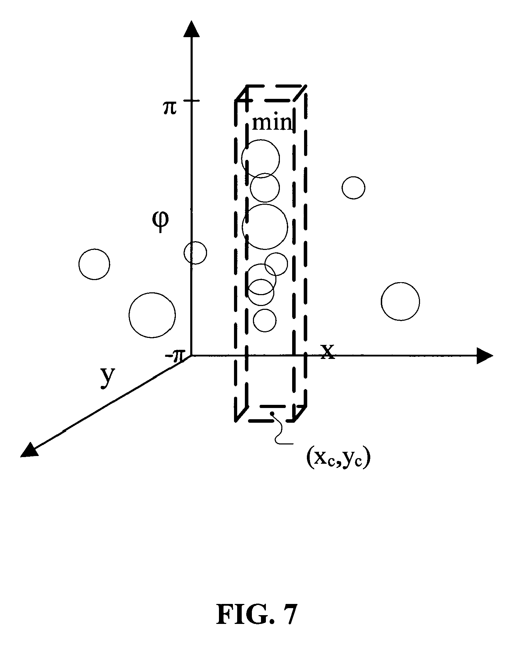

Figure 7 illustrates a nonlinear MIN operation utilized in an embodiment of the invention in the parameter space of a Hough transform;

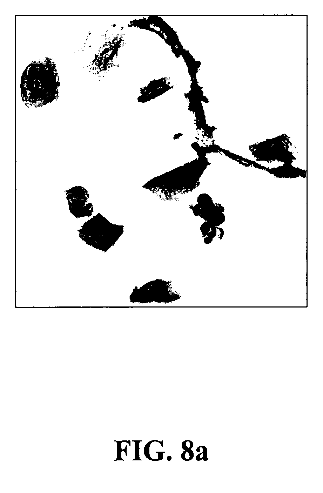

Figures 8a to 8c represent an input image, results of a conventional nuclei detection technique, and results of a nuclei detection technique embodying the invention respectively;

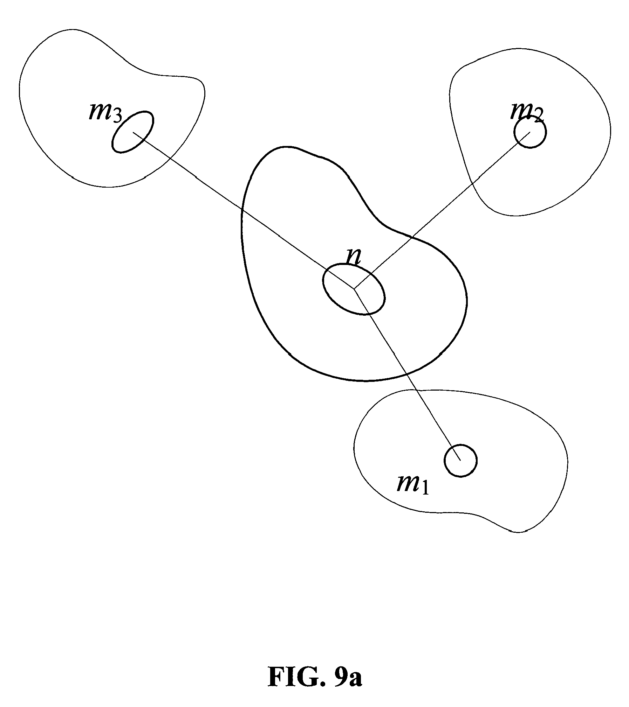

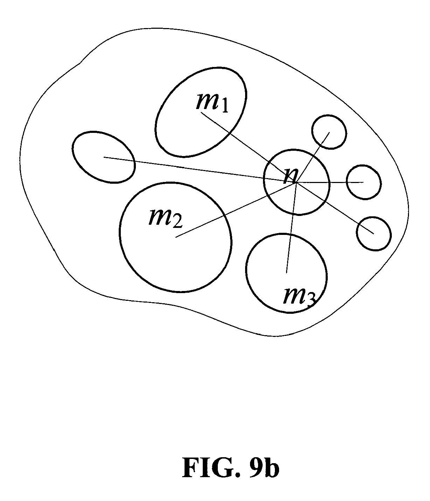

Figure 9a to 9b illustrate different cell configurations which may be distinguished using the described aggregation techniques. Free-lying squamous cells are shown in Figure 9-a and a high density cluster of glandular cells is shown in Figure 9-b;

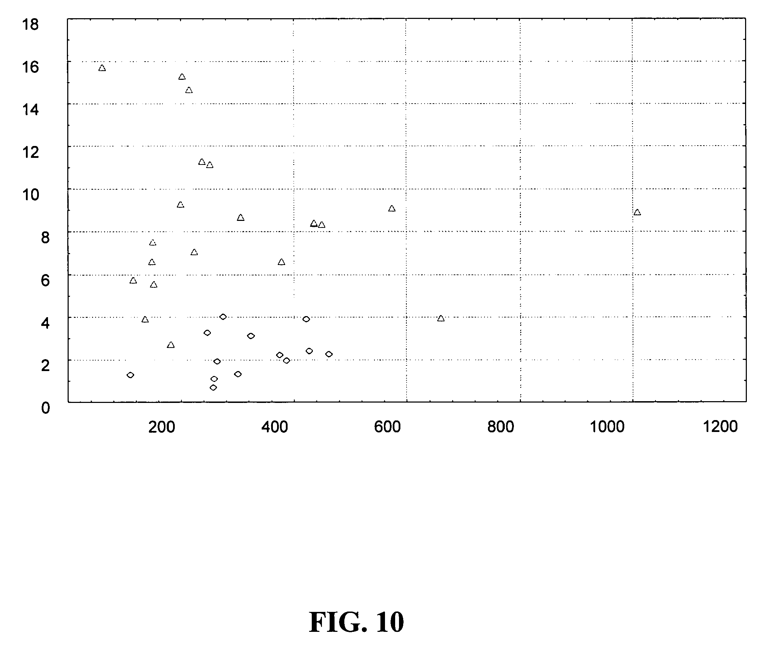

Figure 10 is a scatter plot of nucleus area (X) versus inverse nucleus density (Y) in a typical cell group. Triangles denote abnormal glandular cells like those displayed in Figure 2-d, while rhombs denote normal glandular cells like those displayed in Figure 2-c. The axis units are pixels squared;

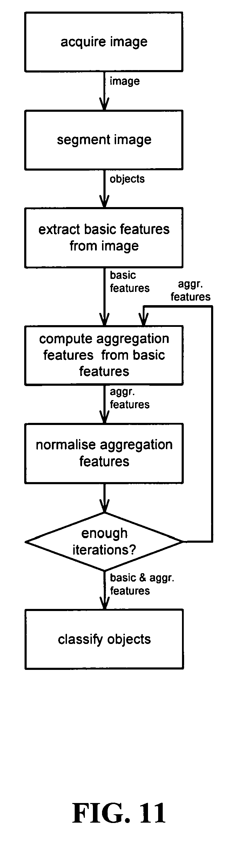

Figure 11 shows a process of pattern recognition using the iterative feature aggregation described below;

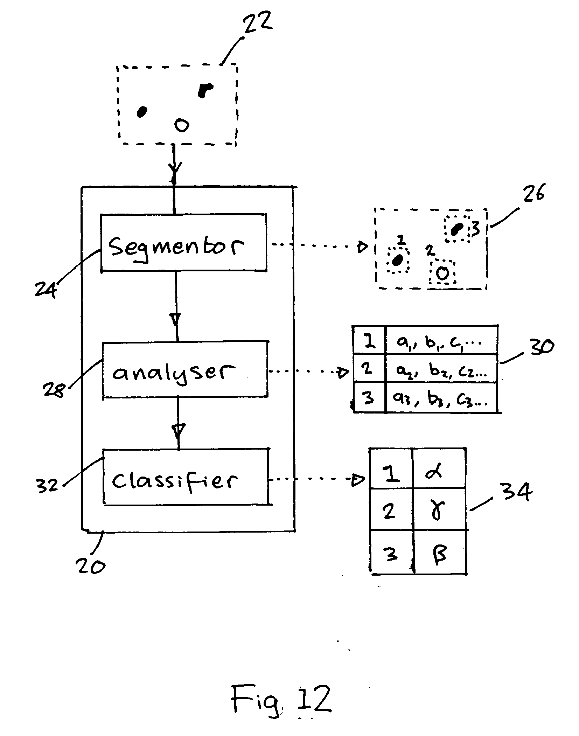

Figure 12 illustrates schematically an apparatus embodiment of one aspect of the invention.

Detailed Description of the Invention

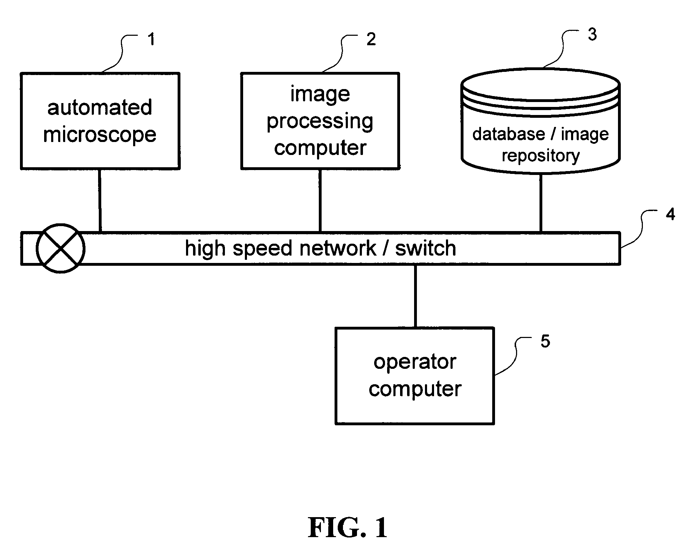

Referring now to figure 1 there is shown an automated scanning microscope 1 based on a linear array detector in conjunction with a computer 2. The automated microscope provides a digitised image of a slide containing a cytological specimen. The identifying barcode on the slide is read. The digital image and the identifying barcode are transferred to the computer system over a high speed connection 4. Portions of digital images which include normal and abnormal cells are given in Figure 2.

Known automated cytology systems such as FocalPoint of Tripath Imaging and CCSS of Visible Diagnostics use frame cameras to capture the digital image. The linear array scanner presented in this embodiment of the invention has some advantages: the scan speed is significantly higher and the image has no shadowing or tiling artefacts.

The computer 2 performs image processing followed by object classification. The image processing method comprises image segmentation and feature extraction as described below. To boost performance the computer may contain multiple processors or multiple nodes. The image can be divided into strips or frames that can be processed concurrently.

Optionally the computer system may compress and store in the repository 3 the digital image together with the metadata such as the identifying barcode and timestamp. Processed slide images may be generated for possible use in quality control, slide inspection and operator training purposes. In the final step, the multiple assessments are integrated into a report which describes the entire slide. Cytologists may review the report on a computer 5 connected to the network, shown in Figure 1.

The following is a description of the principal stages including image segmentation, feature extraction and object classification, which occur in a preferred embodiment of the invention.

**Image Segmentation**

The input image usually arrives at the computer from the image acquisition hardware as a two dimensional array of greyscale or RGB pixel values. Portions in greyscale of examples of such input images are given in Figures 4 and 6-a. In image processing it is preferable to utilise uncompressed images because typical compression algorithms such as JPEG and JPEG2000 introduce artefacts into the image data. Artefacts may be very pronounced at the edges of image tiles or strips. Undesirably, artefacts can be amplified during data transformation such as from one well-known data format for representing colour to another well-known data format for representing colour, e.g. from RGB to CIELAB. It may be advantageous for the input image to be calibrated and converted into a suitable data format for representing colour such as CIELAB, as further discussed below.

In the first stage, the image gradient vector field is computed by convolving the input image with a suitable kernel. Gradient magnitude and direction are obtained for each point in the image or for a portion of thresholded points to reduce the processing time. Examples of gradient images are given in Figures 5 and 6-b. The point intensity indicates the magnitude and the arrow denotes the gradient vector direction. A Sobel, Canny or similar filter can be used to evaluate the gradient for a noisy image. General information about these image processing techniques is given in Russ, J.C. (1999), *The image processing handbook,* 3d edition. CRC Press; Jahne, B. (2002), *Digital image processing, 5th* edition, Springer.

In the second stage, the Hough transform is performed to detect some feature of the cell, or object within the cell, such as the nucleus centre, the nucleolus, chromatin concentrations or the plasma membrane. The Hough transform is a method for detecting curves by exploiting the duality between points on a curve and the parameters of that curve as disclosed in Ballard, D.H (1981), "Generalizing the Hough transform to detect arbitrary shapes", Pattern *Recoqnition* vol 13 no 2 pp 111-122. The Hough transform maps the input data, such as the image gradient vector field, onto a parametric space of the curve. Each input point or each pair of points is used to generate a prediction of the location of the nucleus centre. In addition to the gradient, the pixel intensity level can be used to adjust the predictions. In the result, local maxima in the parametric space correspond to identified nucleus centres. An example of the Hough transformed image is given in Figure 6-c.

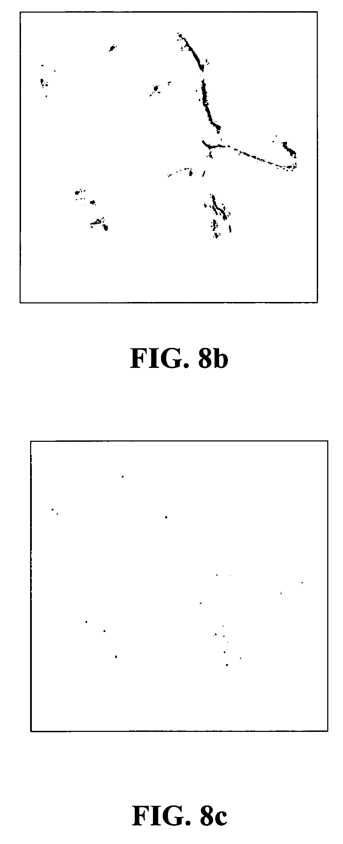

A major issue in the prior art methods utilising the Hough transform for nuclei detection is that the output image may contain insufficient data for cells which have been imaged with a low optical contrast as a result of being somewhat out of focus, or may contain non-nucleus artefacts. In the conventional cellular segmentation [Mouroutis, T. (2000), "Segmentation and classification of cell nuclei in tissue sections", Ph.D. and D.I.C. thesis, Department of Biological and Medical Systems, Imperial College, London, UK] the input image is transformed onto a two dimensional space corresponding to the Cartesian coordinates of the nuclei centres. For example, Figure 8-a shows a portion of a slide in which there are long thin artefacts. These artefacts produce a strong response in the parametric space shown in Figure 8-b and consequently many objects are identified incorrectly as being cell nuclei.

The same problem appears in the method disclosed in Lee, K.-M. et al (1999), A fast and robust approach for automated segmentation of breast cancer nuclei, In *Proceedings of the IASTED International Conference* on *Computer Graphics* and *Imaging,* pp 42-47. In this method two consecutive Hough transforms are performed: one to obtain the knowledge about the nuclei sizes and the second to obtain the coordinates of the nuclei centres.

In one embodiment, the invention comprises an improved Hough transform method for nuclei detection. The input image is transformed in three dimensional parametric space in which the first two dimensions are Cartesian coordinates and the third dimension is the angle $\varphi$ in radians corresponding to the gradient direction, where $-\pi \leq \varphi \leq \pi$. The three dimensional space is then projected on the two dimensional XY plane by applying some validation function along the $\varphi$ axis. The purpose of the validation function is to ensure that all or most directions $\varphi$ have contributed to the given centre prediction. Efficient validation functions include the median transform, the MIN operation or the multiplicative product, or functions thereof.

Advantageously, the improved Hough transform method disclosed herein can be further extended as follows:

through considering the distance between the object edge and the Hough prediction of the object edge being updated, the combination of the Hough transform and the Distance transform is very powerful as a validation function for cell objects. The Distance transform is related to the Euclidean distance map: see e.g. Medial Axis and Skeleton transforms as described in J Russ, The Image Processing Handbook, 3-d edition, CRC Press, 1999, Chapter 7;

applying a threshold function or a saturation function to the input data such as the image intensity and the image gradient to improve the accuracy of the Hough transform;

implementation of lookup tables (LUT) to increase performance;

non-maximum gradient suppression to avoid overexposure of thick boundaries.

Figure 7 illustrates the effect of the validation function in the parametric space. The boxed area contains the predictions which contribute to the potential nucleus centre $(x_c, y_c)$. The other predictions which do not have sufficient support from a significant set of points corresponding to other values of $\varphi$ do not produce peaks in the XY plane. The result of the improved Hough method using the median validation function is given in Figure 7-c. The nuclei are clearly marked by peaks whereas the long thin artefacts are ignored.

Compared to the above disclosed method, the prior art methods omitted the angular information by summing together the predictions from all the directions.

The number of discrete $\varphi$ values employed to validate the location $(x_c, y_c)$ is usually small, e.g. 4 to 16, to reduce memory usage. Advantageously, the three dimensional parametric space can be smoothed before applying the validation function. This smoothing can be achieved by means of a two dimensional convolution with a small Gaussian or tophat kernel.

The validation function may be computed in an iterative way in order to reduce the memory usage as described in Kassim, A. A. et al (1999), A comparative study of efficient generalised Hough transform techniques, *Image Vision Computing* no 17 pp 737-748.

At the third stage, local maxima are identified by scanning the parametric space with a hyper sphere. The size of the hyper sphere defines the minimum distance between nucleus centres. Figure 6-d shows detected local maxima with a small radius of 5 pixels.

In the fourth stage, the boundaries of nuclei and cytoplasm may be derived by means of deformable contours or snakes as disclosed in Kass, M. et al (1988), Snakes: Active contour models, *International Journal of Computer Vision* vol 1 no 4 pp 321-331. Examples of derived boundaries are given in Figure 6-e. A deformable contour model considers an object boundary as a connected structure and exploits a priori knowledge of object shape and smoothness. A curve evolves from an initial position towards the boundary of the object in such a way as to maximize or minimize some functional. The following information can be incorporated in the functional: border vector gradient (magnitude and direction), difference of intensities between the centre and border, distance from the centre, smoothness and contour length.

The Dijkstra algorithm is described in E. W. Dijkstra: A note on two problems in connection with graphs, Numerische Mathematik. 1 (1959), S. 269-271; the algorithm can be adopted to provide efficient implementation of the deformable contour model. The Dijkstra algorithm solves the single-source shortest path problem for a weighted directed graph. Obviously, the algorithm must be extended to provide a multiple-source search. Figure 3 represents a graph in which a deformable curve can be found using the Dijkstra approach. The pixels represent the vertices of the graph, the arrows represent graph edges which connect the pixels. The edge weights may depend on the functional as described above.

Detection of nucleus and cytoplasm boundaries may be improved by integrating flood fill and watershed algorithms described in Malpica, N. et al, Applying Watershed Algorithms to the Segmentation of Clustered Nuclei, *Cytometry,* 28, 289-297, 1997 as well as ray scan algorithms.

In the fifth stage, an object mask is created by filling the area from the centre towards the boundary. In Figure 6-f different objects are painted in randomised colours, which are presented in greyscale here. The mask marks all the pixels that belong to the nucleus and cytoplasm. The mask allows rapid scanning across the cell to extract features.

The above described stages may be combined together in a single computational algorithm to augment performance.

**Feature extraction**

In a preferred embodiment of the invention, two groups of features are computed in two sequential steps:

> 1. features used in the art for classifying abnormalities are computed by processing image data within the segmented area;

> 2. aggregation features are obtained by combining the features of step 1 with the object topological data.

The computational approach is as follows. Let N be the number of segmented objects. For each n-th object *(n=1,2,...,N),* for example, the following basic features can be computed from the image using the segmentation mask:

| | |
|---|---|
| $(x_n, y_n)$ | coordinates of the *n*-th object centre in the image plane |
| $S_n^{\mathbf{nucl}}$ | nucleus area of the *n*-th object measured in pixels |

(continued)

| | |
|---|---|
| $S_n^{\text{cytopl}}$ | cytoplasm area of the *n*-th object measured in pixels |
| $\left(\left(L_n^{\text{nucl}}, a_n^{\text{nucl}}, b_n^{\text{nucl}}\right)\right)$ | nucleus colour statistical mean values of the *n*-th object expressed in CIELAB space |
| $\left(\left(L_n^{\text{cytopl}}, a_n^{\text{cytopl}}, b_n^{\text{cytopl}}\right)\right)$ | cytoplasm colour statistical mean values of the *n*-th object expressed in CIELAB space |

For colorimetric features, characterisation using the CIELAB space is optimal because the Euclidean distance between two points in this space is a perceptually uniform measure for colour difference. In the presence of noise, the approximately-uniform color space HVS may be advantageous [Paschos, G. (2001), "Perceptually uniform colour spaces for color texture analysis: an empirical evaluation", IEEE *Transactions* on *Image Processing* vol 10 no 6 pp 932-937].

Other basic features can be considered to describe object shape, texture and structure such as described in Rodenacker, K. et al (2003), A feature set for cytometry on digitised microscopic images. *Analytical Cellular Pathology,* no 25, IOS Press, Amsterdam, the Netherlands.

In an embodiment of the invention, topological analysis is used to characterise the positional relationships among biological cells. In the first stage, the coordinate differences

$$\Delta x_{m,n} = x_m - x_n$$

$$\Delta y_{m,n} = y_m - y_n$$

are computed for each object pair (m,n). The vector $(\Delta x_{m,n}, \Delta y_{m,n})$ defines the relative position of the m-th and n-th objects in the Cartesian coordinates. The vectors have the properties: $\Delta x_{m,n} = -\Delta x_{n,m}$ and $\Delta y_{m,n} = -\Delta y_{n,m}$. Optionally, the relative position may be defined in the polar system. In this way, the Euclidian distance $d_{m,n}$ and the direction angle $\varphi_{m,n}$ are derived from the coordinate differences:

$$d_{m,n} = \sqrt{\left(\Delta x_{m,n}\right)^2 + \left(\Delta y_{m,n}\right)^2}, \qquad m \neq n,$$

$$\varphi_{m,n} = \text{atan}\left(\Delta y_{m,n}, \Delta x_{m,n}\right),$$

where atan(y,x) is the four-quadrant inverse tangent function. This data has the properties: $d_{m,n} = d_{n,m}$ and $\varphi_{m,n} = \varphi_{n,m} \pm \pi$.

In the second stage, one or more aggregation features are calculated using an aggregation function and a window function such as $g(\Delta x_{m,n}, \Delta y_{m,n})$, $g(d_{m,n}, \varphi_{m,n})$ or $g(d_{m,n})$. The window function defines the object contribution to the aggregated feature depending on the relative position of the object. The following window functions may be used, but many others known to those skilled in the art could be used:

    1. Gaussian

$$g\left(d_{m,n}\right) = \exp\left(-\frac{d_{m,n}^2}{2\sigma^2}\right)$$

    2. Tophat

$$g\left(d_{m,n}\right) = \begin{cases} 1, & d_{m,n} \leq R, \\ 0, & \text{otherwise} \end{cases}$$

where σ is a constant defining a window size. Let $u_m$ be a basic feature of the m-th object, for example $S_m^{\text{nucl}}$ or $L_m^{\text{nucl}}$, and let $v_m$ be an aggregation feature to be computed. The following aggregation function examples can be computed, but many others known to those skilled in the art could be used:

1. Sum

$$v_n = \sum_{\substack{1 \leq m \leq N, \\ m \neq n}} \left[ g\left(\Delta x_{m.n}, \Delta y_{m,n}\right) u_m \right]$$

2. Minimum or MIN

$$v_n = \min_{\substack{1 \leq m \leq N, \\ m \neq n}} \left[ g\left(\Delta x_{m.n}, \Delta y_{m,n}\right) u_m \right]$$

3. Maximum or MAX

$$v_n = \max_{\substack{1 \leq m \leq N, \\ m \neq n}} \left[ g\left(\Delta x_{m.n}, \Delta y_{m,n}\right) u_m \right]$$

4. Moments

$$v_n = \sum_{\substack{1 \leq m \leq N, \\ m \neq n}} \left[ g\left(\Delta x_{m.n}, \Delta y_{m,n}\right) \left(u_m - u_n\right)^p \right]$$

where *p* is a real constant, and the operation within the square brackets in examples 1-4 is the multiplicative product of real numbers.

The following aggregation features can be derived from this framework:

1. Nucleus local density measured in objects per unit area

$$\rho_n = \sum_{\substack{1 \leq m \leq N, \\ m \neq n}} \exp\left(-\frac{d_{m,n}^2}{2\sigma^2}\right) = \sum_{\substack{1 \leq m \leq N, \\ m \neq n}} \exp\left(-\frac{\Delta x_{m,n}^2 + \Delta y_{m,n}^2}{2\sigma^2}\right)$$

2. Nucleus local density weighted by nucleus area

$$\rho_n^{S_{\text{nucl}}} = \sum_{\substack{1 \le m \le N, \\ m \ne n}} \exp\left(-\frac{d_{m,n}^2}{2\sigma^2}\right) S_m^{\text{nucl}}$$

3. Nucleus intensity standard deviation

$$D_n^{L_{\text{nucl}}} = \sum_{\substack{1 \le m \le N, \\ m \ne n}} \exp\left(-\frac{d_{m,n}^2}{2\sigma^2}\right)\left(L_m^{\text{nucl}} - L_n^{\text{nucl}}\right)^2$$

4. Nucleus area deviation

$$D_n^{S_{\text{nucl}}} = \sum_{\substack{1 \le m \le N, \\ m \ne n}} \exp\left(-\frac{d_{m,n}^2}{2\sigma^2}\right)\left(S_m^{\text{nucl}} - S_n^{\text{nucl}}\right)^2$$

5. Neighbour uniformity

$$U_n = \left[\sum_{\substack{1 \le m \le N, \\ m \ne n}} \exp\left(-\frac{d_{m,n}^2}{2\sigma^2}\right)\Delta x_{m,n}\right]^2 + \left[\sum_{\substack{1 \le m \le N, \\ m \ne n}} \exp\left(-\frac{d_{m,n}^2}{2\sigma^2}\right)\Delta y_{m,n}\right]^2$$

Sometimes it may be advantageous to normalise an aggregation feature to provide a more useful statistic. The preferred normalisation factor is

$$\frac{1}{\rho_n} = 1/\sum_{\substack{1 \le m \le M, \\ m \ne n}} \exp\left(-\frac{d_{m,n}^2}{2\sigma^2}\right)$$

or some power thereof, such as the square.

Figures 9-a and 9-b illustrate different cell configurations: free-lying squamous cells are shown in Figure 9-a and a high density cluster of glandular cells in Figure 9-b. The lines denote the distances $d_{m,n}$ between the n-th object being considered and the neighbourhood objects, e.g. $m_1$, $m_2$ and $m_3$. Aggregation features such as the local densities $\rho_n$ and $\rho_n^{S_{\text{nucl}}}$ can distinguish between the two configurations very effectively.

Figure 10 is a scatter plot of the nucleus size feature $S_n^{\text{nucl}}$ versus inverse nucleus density $1/\rho_n$. Triangles corresponding to abnormal glandular cells displayed in Figure 8-d and rhombs corresponding to normal glandular cells displayed in Figure 8-c are distinguished in the plot.

In a preferred embodiment of the invention, iterative aggregation is employed. This enables recognition of larger groups of cells. Multiple aggregations occur one after another in such a way that information about objects propagates across multiple objects. On each iteration, the aggregation feature is derived from the previous step as shown in Figure 11. For example, an iterative feature $\varsigma_n^k$ , , where k is the iteration number, describes the group membership by propagating the local density in the manner:

$$\varsigma_n^0 = \rho_n = \sum_{\substack{1 \leq m \leq M, \\ m \neq n}} g\left(d_{m.n}\right)$$

$$\varsigma_n^{k+1} = \sum_{\substack{1 \leq m \leq M, \\ m \neq n}} g\left(d_{m.n}\right)\varsigma_n^k$$

In particular, iterative aggregations allow amplification of desired features within object groups. Other ways of implementing iterative aggregation will be apparent to those skilled in the art.

In a further embodiment of the invention, aggregation features may be derived not only from the object features, but also from the object classification. In this way, at least two classifiers are utilised. The first classifier leads to a preliminary class membership of the object. Additional aggregation features are then derived both from the basic features and the preliminary class membership. Finally, the second classifier refines the class membership considering all the object features.

Aggregation features can be computed efficiently by using lookup tables, so called "k-dimensional trees" or similar data structures. K-dimensional trees are particularly advantageous for locating neighbouring objects, as described in Knuth, D., The Art of Computer Programming: Sorting and Searching, Second Edition, Addison-Wesley, 1998, and assist in speeding up the aggregation feature calculations.

Advantageously, the aggregation feature method can be combined with an object (eg. a cell) clusterization operation. The combined method will recognize groups of, or clusters of, cells. Aggregation features may be calculated for a cell cluster utilizing properties derived from its member cells. As a result, cell clusters may be statistically classified using processes similar to those which can be applied to individual cells.

The feature aggregation approach is advantageous in utilising data regarding the positional distribution of cells within a cluster or over the entire specimen slide.

Object Classification

Different statistical classifiers can be utilised to divide cells and cell clusters among predefined classes. In the statistical approach [Webb, A. (2002), "*Statistical* pattern *recognition", 2nd* ed. John Wiley], each pattern is represented in terms of D features or measurements and is viewed as a point in a D-dimensional space. Given a set of training patterns from each class, the objective is to establish decision boundaries in the feature space which separate patterns belonging to different classes. The decision boundaries are determined by the probability distributions of the patterns belonging to each class.

In a preferred embodiment of the invention, the following classifiers are most suitable:

- support vector machine (SVM) or hierarchical SVM;

- k-th nearest neighbours ($k$-NN);

- hybrid classifier based on k-NN and Parzen window approaches;

- decision trees.

Although the description here has emphasized the application of the invention to analysing the cells in cervical smears for abnormalities, the invention may be applied to analyse the cells in any biological system, where the at least partial automation described herein produces some benefit such as faster, cheaper or more statistically accurate results. As an example, the invention can be applied to analyse genetically modified crops for the presence of cellular abnormalities, which might be too time consuming to investigate using standard non-automated laboratory procedures. A further example is the analysis of cells in order to evaluate in a more efficient manner the performance of medical procedures during clinical trials or other experiments.

The description here has emphasized the application of the invention to analysing two dimensional images of cells, but it will be obvious to those skilled in the art that the procedures described here could be applied to three dimensional images of cells, with the application of corresponding more computationally-intensive analysis procedures.

**Hardware Implementation Example**

In a preferred embodiment of the embodiment of the invention shown in Figure 1, the scanning microscope 1 is an Aperio ScanScope T2 supplied by Aperio Technologies, Vista, CA, USA, and the computer 2 is a dual processor server running a Microsoft Windows operating system. The scanning microscope and the computer are interconnected using a Gigabit Ethernet. The parallelisation of image recognition is implemented by means of Windows multithreading. The image repository 3 is a Redundant Array of Independent Disks (RAID) connected to the computer 2.

Referring now to figure 12 there is illustrated, in schematic form, an apparatus 20 for putting the image processor computer 2 of figure 1 into effect. An image 22 of biological objects such as cells is passed to a segmentor 24 which seeks to identify separate objects, for example as discussed above and as illustrated by segmented image 26. The segmented image, or data relating to the segments is passed to analyser 28 which identifies characteristics of each segment, and preferably therefore each object, in particular by calculating at least one aggregation feature as already discussed. Features of objects or segments labelled 1,2,3... are illustrated by data structure 30, which is passed to classifier 32, where each segment or object is classified using the calculated features. The resulting classification is illustrated by data structure 34, and this data may be used to identify biological objects such as cells of particular categories.

**Claims**

1. Apparatus for automatically classifying each of a plurality of biological cells shown in an image comprising:

   a segmentor adapted to segment the image into a plurality of objects;
   an analyser adapted to, for each object, calculate from the image data one or more object features including at least one aggregation feature, using the relative spatial positions of other objects; and
   a classifier adapted to classify each object on the basis of its calculated object features, including the at least one aggregation feature.

2. A method of automatically classifying each of a plurality of biological cells shown in an image comprising the steps of:

   segmenting the image into a plurality of objects;
   for each object, calculating from the image data one or more object features including at least one aggregation feature, using the relative spatial positions of other objects; and
   classifying each object on the basis of its calculated object features, including the at least one aggregation feature.

3. The method of claim 2 wherein the aggregation feature is a weighted sum of a selected feature or a function of one or more selected features of the other objects.

4. The method of claim 3 wherein the weighted sum is weighted as a function of a measure of distance between the object and each other object.

5. The method of any of claims 2 to 4 wherein the aggregation feature is calculated using a function of local object density evaluated using

$$\rho(m) = \sum_{\substack{n=1, \\ m \neq n}}^{N} \exp\left(-\frac{d_{m,n}^2}{2\sigma^2}\right),$$

where m, n are object indices, $d^2_{m,n} = (x_m - x_n)^2 + (y_m - y_n)^2$ is a squared distance between indexed objects and σ is a constant defining a window size.

6. The method of any of claims 2 to 5 wherein the calculation of the at least one aggregation feature also uses a previously calculated aggregation feature of each other object.

7. The method of any of claims 2 to 6 wherein the step of classifying comprises a step of classifying an object according to apparent cell abnormality.

8. Apparatus for automatically analysing an image to locate centres of biological cells shown in the image, comprising:

an edge detector arranged to analyse the image data to produce edge data;
a parameteriser arranged to parameterise the edge data to produce parameterised data distributed across the same spatial dimensions as the image and at least one further dimension;
a mapper arranged to apply a mapping to the parameterised data to yield predictions of said centres of biological cells, the mapping including applying a validation function along the at least one further dimension of the parameterised data.

9. A method of automatically analysing an image to locate centres of biological cells shown in the image, comprising the steps of:

applying edge detection to the image to yield edge data;
applying a parameterisation to the edge data to yield parameterized data, wherein the parameterised data is distributed across the same spatial dimensions as the image and at least one further dimension;
applying a mapping to the parameterised data to yield predictions of said centres of biological cells, the mapping including applying a validation function along the at least one further dimension of the parameterised data.

10. The method of claim 9 wherein the parameterisation comprises applying a Hough transform or a generalized Hough transform.

11. The method of claim 9 or 10 wherein the parameterised data represents potential features of or objects within said cells within the space of said image and said at least one further dimension.

12. The method of claim 11 wherein the further dimension is populated from the image gradient direction of each image point contributing to a potential feature or object.

13. The method of any of claims 9 to 12 wherein the validation function depends on the Euclidean distance between the object edge and the object edge prediction obtained from the parametrized data.

14. The method of any of claims 2 to 7 and 9 to 13 wherein the image is an image of a specimen of cervical cells.

15. The method of any of claims 2 to 7 and 9 to 13 further comprising identifying abnormal ones of said cells.

16. The method of any of claims 2 to 7 and 9 to 15 wherein each object is a cell nucleus.

17. The method of any of claims 2 to 7 and 9 to 15 wherein each object is a cell cytoplasm.

18. The method of any of claims 2 to 7 and 9 to 17 further comprising a step of acquiring the image.

19. Apparatus comprising means for putting into effect the steps of the method of any of claims 2 to 7 and 9 to 18.

20. One or more computer readable media comprising computer program code adapted to put into effect the steps of any of claims 2 to 7 and 9 to 19 when executed on suitable computer apparatus.

21. An apparatus for classifying cells within a biological specimen; said apparatus comprising:

a. means for acquiring at least one image of the biological specimen, wherein the output data is a digital image;
b. means for image segmentation, wherein the input data is the digital image and the output data is a set of segmented objects;
c. means for feature extraction, wherein the input data is a set of segmented objects; the output data is a set of object features for each input object; the set of object features has at least one aggregation feature calculated from predefined features of neighbourhood objects;
d. means for object classification wherein the input data is a set of object features and the output data is the class membership of the object.

22. An apparatus classifying the abnormality of cells within a specimen of cervical cells; said apparatus comprising:

a. means for acquiring at least one image of the specimen, wherein the output data is a digital image;

b. means for image segmentation, wherein the input data is the digital image and the output data is a set of segmented objects;

c. means for feature extraction, wherein the input data is a set of segmented objects; the output data is a set of object features for each input object; the set of object features has at least one aggregation feature calculated from predefined features of neighbourhood objects;

d. means for object classification wherein the input data is a set of object features and the output data is the membership of the object.

23. An apparatus for locating the centres of cells within a digital image of a biological specimen; said apparatus comprising:

a. means for edge detection wherein the input data is the digital image and the output data is edges such as but not limited by image gradient data;

b. means for object parameter prediction based on the Hough transform, wherein the input data is the image edges and the output data is predictions in a parametric space of at least one dimension greater than the image data dimension;

c. means for parameter space mapping wherein the input data is object parameter predictions and the output data is object centre predictions and a validation function maps the parameter space onto the space containing the centre predictions.

24. The apparatus of claim 23 in which an object parameter smoothing operation is performed such as a convolution of the object parameters and a smoothing kernel; the smoothing operation is performed after the Hough transform and before the validation function.

**FIG. 1**

EP 1 699 016 A2

**FIG. 2a**

**FIG. 2b**

**FIG. 2c**

**FIG. 2d**

FIG. 3

FIG. 4

**FIG. 5**

FIG. 6a

FIG. 6b

FIG. 6c

**FIG. 6d**

**FIG. 6e**

**FIG. 6f**

**FIG. 7**

**FIG. 8a**

**FIG. 8b**

**FIG. 8c**

**FIG. 9a**

**FIG. 9b**

**FIG. 10**

```
┌─────────────────────────┐
│      acquire image       │
└─────────────────────────┘
            │ image
            ▼
┌─────────────────────────┐
│      segment image       │
└─────────────────────────┘
            │ objects
            ▼
┌─────────────────────────┐
│  extract basic features  │
│       from image         │
└─────────────────────────┘
      basic              aggr.
     features          features
            │              │
            ▼              ▼
┌─────────────────────────┐
│  compute aggregation     │
│  features  from basic    │
│       features           │
└─────────────────────────┘
      aggr.
     features
            │
            ▼
┌─────────────────────────┐
│  normalise aggregation   │
│       features           │
└─────────────────────────┘
            │
            ▼
          ╱─────╲
         ╱ enough ╲
        ╱iterations?╲
         ╲         ╱
          ╲───────╱
       basic & aggr.
         features
            │
            ▼
┌─────────────────────────┐
│     classify objects     │
└─────────────────────────┘
```

# FIG. 11

Fig. 12